# EUROPÄISCHE PATENTANMELDUNG

(11) **EP 4 050 217 A1**
(43) Veröffentlichungstag der Anmeldung: **31.08.2022**
(21) Anmeldenummer: 21159592.1
(22) Anmeldetag: 26.02.2021
(51) Int. Cl.: F04D 25/06, F04D 29/10, F04D 29/58, F02B 39/10

(54) **GASVERDICHTER**

(71) Anmelder: BMTS Technology GmbH & Co. KG, 70376 Stuttgart (DE)
(72) Erfinder: BEYERLEIN, Sebastian, 73765 Neuhausen auf den Fildern (DE); KLEINSCHMIDT, Rüdiger, 74354 Besigheim (DE); SCHMITT, Steffen, 71254 Ditzingen (DE); KUHNE, Oliver, 70374 Stuttgart (DE); BLASCH, Philipp, 70188 Stuttgart (DE)
(74) Vertreter: Herrmann, Jochen

(57) **Zusammenfassung**

Die Erfindung betrifft einen Gasverdichter 10, insbesondere Turbolader mit einem drehbar gelagerten Verdichterrad, das zumindest teilweise in einem Verdichtergehäuse angeordnet ist, wobei das Verdichtergehäuse einen Gas-Führungsbereich aufweist, zur Führung eines mittels des Verdichterrads komprimierten Gasstroms, wobei ein Elektromotor vorgesehen ist, der einen Motorrotor und einen Motorstator aufweist und der zumindest bereichsweise in einem Aufnahmebereich eines Motorgehäuses aufgenommen ist. Um bei einem solchen Gasverdichter 10 auf einfache Weise einen dauerhaft zuverlässigen Betrieb sicherzustellen, ist es gemäß der Erfindung vorgesehen, dass ein Gasdruck-Erzeuger vorgesehen ist, der über wenigstens eine Gas-Druckleitung (70) in luftleitender Verbindung mit dem Aufnahmebereich des Motorgehäuses (20) steht.

## Beschreibung

Die Erfindung betrifft einen Gasverdichter, insbesondere einen Turbolader mit einem drehbar gelagerten Verdichterrad, das zumindest teilweise in einem Verdichtergehäuse angeordnet ist, wobei das Verdichtergehäuse einen Gas-Führungsbereich aufweist, zur Führung eines mittels des Verdichterrads komprimierten Gasstroms, wobei ein Elektromotor vorgesehen ist, der einen Motorrotor und einen Motorstator aufweist und der zumindest bereichsweise in einem Aufnahmebereich eines Motorgehäuses aufgenommen ist.

Gasverdichter im Sinne der Erfindung können beispielsweise Turbolader, insbesondere, Abgasturbolader, Aufladeaggregate, beispielsweise für Brennstoffzellen oder sonstige Verdichter sein, mittels denen ein Gas, vorzugsweise Luft komprimiert wird.

US 8,157,544 B2 offenbart einen Abgasturbolader, welcher auf einer Welle ein Verdichterrad und ein Turbinenrad trägt. Im Bereich des Verdichterrads ist der Welle ein Elektromotor zugeordnet. Mittels des Elektromotors kann der Antrieb der Welle unterstützt werden. Der Elektromotor weist ein Motorgehäuse auf, in das der Motorstator eingebaut ist. Der Motorstator besitzt einen Eisenkern, auf den Spulen aufgewickelt sind. Der Eisenkern und die Spulen sind in eine Vergussmasse eingebettet. Der Motorrotor des Elektromotors ist mit seinen Permanentmagneten auf die Welle aufgezogen. Das Motorgehäuse ist in Form einer Kartusche ausgebildet, die in ein Lagergehäuse eingesetzt werden kann, in der die Welle mittels hydrodynamischer Gleitlager gelagert ist. Während des Betriebseinsatzes saugt das Verdichterrad Luft entlang der Drehachse der Welle über eine Gaszuführung an. Die Luft wird vom Verdichterrad komprimiert und radial zur Drehachse in einen Diffusor übergeleitet. Der Diffusor führt zu einem Spiralkanal. In diesem Spiralkanal wird die Luft weiter komprimiert. Im Anschluss an den Spiralkanal kann die verdichtete Luft einem Verbrennungsmotor zugeführt werden. Der Diffusor und der Spiralkanal werden von einem Verdichtergehäuse gebildet, in dem das Verdichterrad angeordnet ist. Mit dem Elektromotor kann das Ansprechverhalten des Turboladers optimiert werden. Im Bereich zwischen dem Motorgehäuse und dem Lagergehäuse ist eine Dichtung vorgesehen. Diese soll verhindern, dass das Schmiermittel, welches zum Betrieb der hydrodynamischen Gleitlager benötigt wird, in den Bereich des Elektromotors gelangt.

Solche elektrisch angetriebenen, hydrodynamisch oder mit Wälzlagern gelagerten Gasverdichter weisen in gewissen Betriebsbereichen Schmiermittelleckage auf. Verdichterseitig wird das Schmiermittel über die Dichtung und den Verdichterrad-Seitenraum in den Verdichter-Austrittsbereich gefördert. Dort verunreinigt das Schmiermittel die hochdruckseitige Verdichterabluft. Dies ist besonders bei niedrigen Läuferdrehzahlen der Fall, da der Verdichter bei niedrigen Drehzahlen keinen ausreichend hohen Gegendruck im Verdichterrad-Seitenraum erzeugt. Im Falle eines elektrisch unterstützten Gasverdichters kann das Lager-Schmiermittel auch in den Elektromotor gelangen. Falls es nicht abtransportiert wird, kann es sich dort ablagern, die Komponenten verunreinigen und im schlimmsten Fall die Werkstoffe in diesem Bereich angreifen. Im Unterschied zur verdichterseitigen Dichtstelle, die nur im Bereich niedriger Drehzahlen Leckage aufweist, kann motorseitig im gesamten Betriebsbereich Leckage auftreten. Systembedingt wird hier kein Druck aufgebaut, der der Leckage entgegenwirkt.

Es ist Aufgabe der Erfindung, einen elektrisch unterstützten Gasverdichter der eingangs erwähnten Art bereitzustellen, der auf einfache Weise einen zuverlässigen Betrieb zulässt.

Diese Aufgabe wird dadurch gelöst, dass ein Gasdruck-Erzeuger vorgesehen ist, der über wenigstens eine Gas-Druckleitung in luftleitender Verbindung mit dem Aufnahmebereich des Motorgehäuses steht.

Erfindungsgemäß kann mit dem Gasdruck-Erzeuger über die Gas-Druckleitung ein Druck in dem Aufnahmebereich des Motorgehäuses aufgebaut werden. Insbesondere kann dadurch im Aufnahmebereich ein Überdruck erzeugt werden, der verhindert, dass Verunreinigungen, insbesondere Schmiermittel, in den Aufnahmebereich eindringt. Auf diese Weise wird zuverlässig eine Verschmutzung im Aufnahmebereich und damit eine Verschmutzung des Motorrotors und/oder des Motorstators zumindest deutlich reduziert. Dies sichert auf einfache Weise die Betriebssicherheit des elektromotorisch unterstützten Gasverdichters.

Gemäß einer bevorzugten Erfindungsvariante kann es vorgesehen sein, dass der Gasdruck-Erzeuger das Verdichterrad aufweist, und dass die Gas-Druckleitung mit dem von dem Verdichtergehäuse gebildeten oder einem in Strömungsrichtung nach dem Verdichtergehäuse angeordneten Gas-Führungsbereich in gasleitender Verbindung steht. Auf diese Weise wird der ohnehin vorhandene Druckaufbau, welcher mit dem Verdichterrad generiert wird, genutzt um den Aufnahmebereich des Motorgehäuses vor Verschmutzungen zu schützen. Hierbei ergibt sich dann auch eine besonders einfach aufgebaute und kostengünstige Konstruktion.

Eine denkbare Erfindungsvariante ist dergestalt, dass der Elektromotor mit seinem Motorrotor mittelbar oder unmittelbar an eine Welle angekoppelt ist, dass die Welle wenigstens einen Lagerabschnitt aufweist zur drehbaren Lagerung der Welle, vorzugsweise in einem Lagergehäuse, dass in Achsrichtung der Welle zwischen dem Lagerabschnitt und dem Motorrotor ein Dichtabschnitt, vorzugsweise aufweisend eine Dichtung, angeordnet ist, und dass der Aufnahmebereich des Motorgehäuses, der mit der Gas-Druckleitung in luftleitender Verbindung steht und/oder das Verdichterrad in Achsrichtung der Welle auf der dem Lagerabschnitt abgewandten Seite des Dichtabschnitts angeordnet ist.

Über die Gas-Druckleitung wird, wie vorstehend beschrieben, ein Überdruck im Aufnahmebereich gegenüber dem Bereich erzeugt, der auf der dem Aufnahmebereich abgewandten Seite der Dichtung angeordnet ist. Somit wird verhindert, dass Leckage über die Dichtung in das Motorgehäuse gelangen kann.

Sind sowohl der Aufnahmebereich des Motorgehäuses als auch das Verdichterrad auf der der Lagerstelle gegenüberliegenden Seite der Dichtung angeordnet, so wird nicht nur eine Verunreinigung des Elektromotors sondern auch eine Verunreinigung des Verdichterrads bzw. des Druckbereichs im Verdichtergehäuse verhindert. Insbesondere wird dadurch verhindert, dass beispielsweise Schmiermittel oder sonstige Verschmutzungen, welche im Bereich der der Lagerstelle zugewandten Seite der Dichtung entstehen, zum Verdichterrad vordringen können.

Eine denkbare Erfindungsvariante ist dergestalt, dass der wenigstens eine Lagerabschnitt ein hydrodynamisches Gleitlager aufweist, welches mit einer Schmiermittelführung in fluidleitender Verbindung steht, derart, dass dem hydrodynamischen Gleitlager über eine Schmiermittelversorgung Schmiermittel zuleitbar ist.

Gemäß einer Erfindungsvariante kann es vorgesehen sein, dass ein Lagergehäuse vorgesehen ist, in dem die Welle mittels zumindest eines Lagerabschnitts gelagert ist, und dass das Motorgehäuse lösbar mit dem Lagergehäuse verbunden ist oder zumindest bereichsweise einteilig mit dem Lagergehäuse verbunden ist. Ist das Motorgehäuse lösbar mit dem Lagergehäuse verbunden, so können einzelne Systemkomponenten gebildet werden, die insbesondere auch eine bausatzartige Gestaltung erlauben. Zur Verringerung des Teile- und Montageaufwand kann es allerdings auch vorgesehen sein, dass das Motorgehäuse und das Lagergehäuse einteilig miteinander verbunden sind.

Eine besonders bevorzugte Erfindungsvariante ist dergestalt, dass die Gas-Druckleitung zumindest bereichsweise durch das Lagergehäuse hindurchgeführt ist. Die Gas-Druckleitung kann mithin in das Lagergehäuse integriert sein, so dass kein zusätzlicher Montageaufwand entsteht. Wenn die Gas-Druckleitung in das Lagergehäuse integriert ist, so ist sie gleichzeitig vor mechanischen Beanspruchungen geschützt.

Denkbar ist es jedoch allerdings im Rahmen der Erfindung auch, dass eine separate Gas-Druckleitung verbaut ist.

In einer alternativen Ausgestaltungsvariante der Erfindung kann es somit beispielsweise vorgesehen sein, dass die Gas-Druckleitung zumindest bereichsweise von einer Bypassleitung, vorzugsweise einer flexiblen Rohrleitung, gebildet ist, die vorzugsweise an dem Lagergehäuse vorbeigeleitet ist.

Eine mögliche Erfindungsvariante kann so sein, dass der Aufnahmebereich des Motorgehäuses einen Druckraum aufweist, und dass die zumindest eine Gas-Druckleitung einen Leitungsaustritt aufweist, der in den Druckraum mündet. In dem Druckraum lässt sich dann zuverlässig ein Überdruck gegenüber der Umgebung erzeugen.

Ein erfindungsgemäßer Gasverdichter kann derart ausgestaltet sein, dass der Aufnahmebereich des Motorgehäuses gegenüber der Umgebung abgedichtet ist. Auf diese Weise lässt sich wirkungsgradoptimiert in dem Aufnahmebereich ein Druck erzeugen und halten. Der aufgebaute Druck kann dann lediglich über unvermeidbare Leckagestellen, beispielsweise im Bereich der Dichtabschnitte des Motorgehäuses, zum Schutz des Elektromotors entweichen.

Eine besonders bevorzugte Erfindungsvariante ist derart, dass das Verdichtergehäuse eine Gaszuführung aufweist, dass in Strömungsrichtung nach der Gaszuführung das Verdichterrad angeordnet ist, dass in Strömungsrichtung nach dem Verdichterrad der Verdichterkanal angeordnet ist, und dass die Gas-Druckleitung im Bereich des Verdichterkanals mit einem Leitungseintritt mündet. Bei dieser Ausgestaltung wird der ohnehin vorhandene Verdichterbereich des Gas-Verdichters als Gasdruck-Erzeuger im Sinne der Erfindung verwendet.

Hierbei kann es insbesondere auch vorgesehen sein, dass der Verdichterkanal einen Diffusorkanal aufweist, an den vorzugsweise in Strömungsrichtung nach dem Verdichterrad ein Spiralkanal angeschlossen ist, und dass die Gas-Druckleitung im Bereich des Diffusorkanals oder im Bereich des Spiralkanals mit dem Leitungseintritt mündet. Hierdurch ergibt sich eine besonders kompakte und einfache Bauweise.

Eine weitere Verringerung des baulichen Aufwandes lässt sich beispielsweise dadurch erreichen, dass das Verdichtergehäuse lösbar mit dem Lagergehäuse verbunden oder das Verdichtergehäuse zumindest teilweise einteilig von dem Lagergehäuse gebildet wird.

Wenn vorgesehen ist, dass eine Kühleinrichtung vorgesehen ist, die einen Kühlmittelkanal aufweist, derart, dass mittels eines im Kühlmittelkanal geführten Kühlmediums der Elektromotor und/oder die Gas-Druckleitung gekühlt wird, dann kann verhindert werden, dass sich der Elektromotor durch die Beaufschlagung mit Druckluft ungewollt aufheizt. Hierbei ist es beispielsweise denkbar, dass in dem Lagergehäuse und/oder dem Motorgehäuse einen Kühlmittelkanal vorhanden ist, in dem ein Kühlmittel zirkuliert werden kann. Mit dem Kühlmittelkanal kann die Gas-Druckleitung und/oder der Aufnahmebereich des Motorgehäuses gekühlt werden, um die Wärme abzuführen.

Im Rahmen der Erfindung kann es insbesondere auch vorgesehen sein, dass der Kühlmittelkanal im Bereich des Motorgehäuses und/oder im Bereich des Lagergehäuses geführt ist. Der Kühlmittelkanal kann beispielsweise dabei in das Motorgehäuse und/oder das Lagergehäuse eingearbeitet, beispielsweise eingebohrt, oder zusammen mit der Fertigung des Motorgehäuses und/oder des Lagergehäuses urgeformt, beispielsweise eingegossen, sein.

Ein erfindungsgemäßer Gasverdichter kann dergestalt sein, dass das Motorgehäuse den Motorstator mit seinem Statorkern und Statorwicklungen aufnimmt, und dass der Motorstator zumindest bereichsweise in eine Vergussmasse im Motorgehäuse eingebettet ist. Über die Vergussmasse kann der Motorstator sicher im Motorgehäuse gehalten werden. Zudem kann die Vergussmasse dazu genutzt werden, Wärme aus dem Aufnahmeraum in die Vergussmasse aufzunehmen und diese über die Vergussmasse abzuleiten. Hierdurch verbessert sich der Wirkungsgrad des Elektromotors.

Die Erfindung wird im Folgenden anhand von in den Zeichnungen dargestellten Ausführungsbeispielen näher erläutert. Es zeigen:
Figur 1 im Vollschnitt und Teildarstellung eines Gasverdichters,
Figur 2 eine Motoreinheit des Gasverdichters gemäß Figur 1 in perspektivischer Darstellung,
Figur 3 die Motoreinheit gemäß Figur 2 in Seitenansicht und im Schnitt,
Figur 4 eine Motoreinheit mit einem modifizierten Motorgehäuse,
Figur 5 die Motoreinheit gemäß den Figuren 2 und 3 in einer vereinfachten Darstellung in Seitenansicht und im Schnitt und
Figur 6 in Seitenansicht und im Vollschnitt eine weitere Ausgestaltungsvariante eines Gasverdichters.

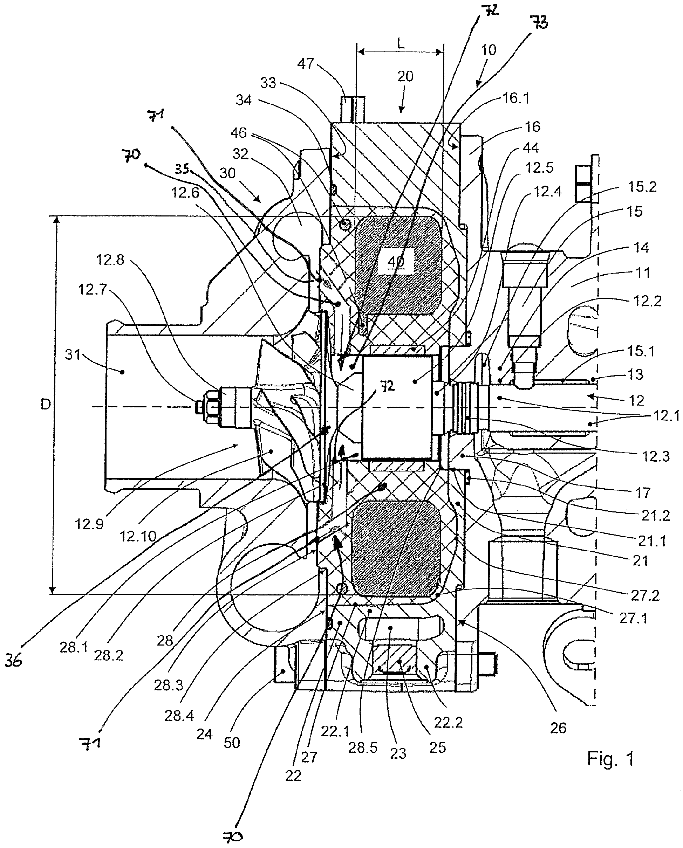

Figur 1 zeigt einen Gasverdichter 10, beispielsweise einen Turbolader, insbesondere einen Abgasturbolader, zur Verwendung in einem Verbrennungsmotor. Die Erfindung ist allerdings nicht auf Abgasturbolader beschränkt, sondern kann auch in einem sonstigen Gaskompressor, beispielsweise in einem Turbolader, beispielsweise in Brennstoffzellenanordnungen zur Gasverdichtung oder in sonstigen Luft-Aufladeaggregaten, Verwendung finden.

In Figur 1 ist, zur besseren Übersichtlichkeit, nur ein Teil des Turboladers gezeigt. Insbesondere veranschaulicht diese Darstellung die Gestaltung des Turboladers im Bereich seiner Verdichterseite. Auf der rechten Bildseite ist durch eine gestrichelte Linie angedeutet, dass der Turbolader zusätzlich auch noch eine Expansionsseite mit einem Turbinenrad aufweisen kann. Dieser Bereich des Turboladers kann in gängiger Weise ausgeführt werden. Vorzugsweise kann dieser Bereich dann auch so gestaltet sein, wie es in der EP 3 293 406 A1 beschrieben ist.

Der Turbolader besitzt ein Lagergehäuse 11, in dem eine Welle 12 drehbar gelagert ist. Bevorzugt ist die Lagerung der Welle 12 so gestaltet, wie dies in der EP 3 293 406 A1 beschrieben ist. Demgemäß können im Rahmen der Erfindung zur Lagerung der Welle 12 wenigstens ein, vorzugsweise zwei hydrodynamische Gleitlager 12.2 verwendet sein.

Denkbar ist es jedoch auch, dass die Welle 12 im Rahmen der Erfindung mittels einem oder mehreren Wälzkörperlagern, beispielsweise Kugellagern, gelagert ist.

Schließlich ist es im Rahmen der Erfindung auch denkbar, dass die Welle 12 gemischt mittels einem oder mehreren hydrodynamischen Gleitlagern 12.2 und einem oder mehreren Wälzkörperlagern gelagert ist.

Das hydrodynamische Gleitlager 12.2 weist einen Stator und einem relativ zum Stator drehbaren Rotor auf, wobei eine Rotor-Lagerfläche einer Gegenfläche des Stators zur hydrodynamischen Druckerzeugung gegenübersteht. Die Rotor-Lagerfläche und/oder die Gegenfläche bilden bei einem Schnitt längs und durch die Rotationsachse der Welle 12 in Schnittansicht eine durchgehende Lagerkontur, die aus wenigstens zwei Konturabschnitten gebildet ist.

Der durch die Konturabschnitte gebildete Konturenzug ist dabei so gestaltet, dass er, vorzugsweise in Achsrichtung der Welle 12 durchgehend, hydrodynamische Tragfähigkeit erzeugt, die in radialer und axialer Richtung wirkt. Dabei können beispielsweise die Konturabschnitte mittels wenigstens eines Übergangsabschnitts derart stetig ineinander übergeleitet sein, dass durchgehend hydrodynamische Tragfähigkeit über die Konturabschnitte und den Übergangsabschnitt erzeugbar ist.

Das Gleitlager ist vorzugsweise als Mehrflächengleitlager mit zwei oder mehreren Schmierkeilen im Bereich der Konturabschnitte und des Übergangsabschnittes ausgebildet.

Entsprechend den vorstehenden Ausführungen kann die Welle 12 beispielsweise zwei Lagerabschnitte 12.1 aufweisen, die jeweils Teil eines hydrodynamischen Gleitlagers 12.2 sind. Die beiden hydrodynamischen Gleitlager 12.2 sind zueinander axial beabstandet. Eines der hydrodynamischen Gleitlager 12.2 kann dabei, wie Figur 1 zeigt, im Bereich der Verdichterseite des Turboladers angeordnet sein. Das andere hydrodynamische Gleitlager 12.2 kann dem turbinenseitigen Bereich des Turboladers zugeordnet sein. Die beiden Lagerabschnitte 12.1 stehen Lagerstellen 13, 14 des Lagergehäuses 11 gegenüber, um die hydrodynamischen Gleitlager 12.2 zu bilden. Dabei können die Lagerstellen 13, 14 auch von einer separaten Buchse oder separaten Buchsen des Lagergehäuses 11 gebildet sein. Die hydrodynamischen Gleitlager 12.2 werden über eine Schmiermittelversorgung 15 des Lagergehäuses 11 mit Schmiermittel versorgt. Die Schmiermittelversorgung 15 weist Schmiermittelführungen 15.1 auf, die zu den hydrodynamischen Gleitlagern 12.2 geleitet sind. Weiterhin sind Ableitungen 15.2 vorgesehen. Durch diese kann das Schmiermittel nach Durchströmen der hydrodynamischen Gleitlager 12.2 abgeleitet werden.

Im Anschluss an den Lagerabschnitt 12.1 besitzt die Welle 12 einen Dichtabschnitt 12.3. Mit diesem Dichtabschnitt 12.3 ist die Welle 12 gegenüber einer Durchführung des Lagergehäuses 11 abgedichtet. Der Dichtabschnitt 12.3 kann von der Welle 12 selbst, also einteilig mit dieser ausgeführt sein. Denkbar ist es jedoch auch, dass die Welle 12 ein separates Bauteil trägt, das den Dichtabschnitt 12.3 bildet. Vorzugsweise kann es vorgesehen sein, dass dieses separate Bauteil auch den Lagerabschnitt 12.1 bildet, wobei weiter vorzugsweise der Lagerabschnitt 12.1 einteilig mit dem Dichtabschnitt 12.3 verbunden ist.

Die Welle 12 trägt mittelbar oder unmittelbar anschließend an den Dichtabschnitt 12.3 einen Motorrotor 12.4. Der Motorrotor 12.4 ist Teil eines Elektromotors und weist Permanentmagnete 12.5 auf, die mit der Welle 12 fest verbunden sind.

Auf der dem Dichtabschnitt 12.3 gegenüberliegenden Seite des Motorrotors 12.4 bildet die Welle 12 einen Übergangsabschnitt 12.6. Auf diesem Übergangsabschnitt 12.6 ist ein Verdichterrad 12.9 montiert. Zu diesem Zweck weist das Verdichterrad 12.9 eine Bohrung auf, mit der es auf die Welle 12 aufgeschoben ist. Das Verdichterrad 12.9 stützt sich gegen den Übergangsabschnitt 12.6 ab und wird mit einer Mutter 12.8 gesichert. Die Mutter 12.8 ist auf einen Endabschnitt 12.7 der Welle 12 aufgeschraubt.

Das Verdichterrad 12.9 besitzt ein Abschlusselement 36, an dem Verdichterschaufeln 12.10 einteilig angeformt sind. Das Verdichterrad 12.9 ist drehbar in einem Verdichtergehäuse 30 angeordnet. Das Verdichtergehäuse 30 besitzt eine Gaszuführung 31, die stromauf des Verdichterrads 12.9 angeordnet ist. In Strömungsrichtung nach dem Verdichterrad 12.9 ist ein Diffusorkanal 35 vorgesehen. Der Diffusorkanal 35 geht in einen spiralförmigen Verdichterkanal 32 über.

Wie Figur 1 zeigt, weist das Verdichtergehäuse 30 eine Anschlussseite 33 auf. Mit dieser Anschlussseite 33 ist das Verdichtergehäuse 30 an ein Motorgehäuse 20 angekoppelt. Dabei stützt sich das Verdichtergehäuse 30 mit seiner Anschlussseite 33 an einer Stützfläche 24 des Motorgehäuses 20 ab. Für eine abgedichtete Verbindung ist eine Dichtung 34 im Bereich der Anschlussseite 33 vorgesehen.

Das Motorgehäuse 20 besteht vorzugsweise aus einem nicht magnetisierbaren Material, beispielsweise aus Aluminium und besitzt eine Wandung 21, die in Form eines Bodens an der dem Lagergehäuse 11 zugewandten Seite angeordnet ist. Die Wandung 21 ist mit einer Durchführung 21.1 in Form einer Bohrung versehen. In diese Durchführung 21.1 ist ein Zentrierabschnitt 17 des Lagergehäuses 11 eingepasst. Auf diese Weise ist das Motorgehäuse 20 gegenüber dem Lagergehäuse 11 in radialer Richtung ausgerichtet. Vorteilhafterweise kann es weiterhin vorgesehen sein, dass die Durchführung 21.1 zusätzlich zu dem Zentrierabsatz 17 einen weiteren axialen Abschnitt aufweist. Dieser weitere axiale Abschnitt hat einen zu dem Zentrierabsatz 17 abweichenden Innendurchmesser und dient zur Aufnahme des Motorrotors 12.5.

Wie Figur 1 erkennen lässt, ist das Motorgehäuse 20 zwischen dem Lagergehäuse 11 und dem Verdichtergehäuse 30 angeordnet. Entsprechend besitzt das Lagergehäuse 11 eine Befestigungsfläche 16.1, die vorzugsweise an einem Flansch 16 ausgebildet sein kann. Das Motorgehäuse 20 liegt mit einer Stützfläche 26 an der Befestigungsfläche 16.1 an. Zur Abdichtung ist eine Dichtung 21.2 im Bereich zwischen der Stützfläche 26 und der Befestigungsfläche 16.1 vorgesehen.

Dadurch, dass das Motorgehäuse 20 zwischen dem Lagergehäuse 11 und dem Verdichtergehäuse 30 angeordnet ist, wird eine kompakte und einfach zu montierende Bauweise erreicht. Zur Fixierung der Baueinheiten aneinander können Befestigungselemente 50, beispielsweise Befestigungsschrauben, vorgesehen sein. Mit den Befestigungselementen 50 können die drei Gehäuse gegeneinander verspannt werden.

Das Motorgehäuse 20 besitzt im Anschluss an die Wandung 21 eine umlaufende Seitenwand 22. Dabei steigt die Seitenwand 22 von der Wandung 21 auf. Im vorliegenden Ausführungsbeispiel schließt die Seitenwand 22 mittelbar über eine Verrundung 27.1 an die Wandung 21 an. Entsprechend bildet die Seitenwand 22 eine Innenwand 22.1. Diese geht über die Verrundung 27.1 in einen Bodenabschnitt 27.2 der Wandung 21 über.

Die Innenwand 22.1, die Verrundung 27.1 und der Bodenabschnitt 27.2 bilden eine gemeinsame Aufnahme. In dieser Aufnahme ist eine Vergussmasse 28 aufgenommen.

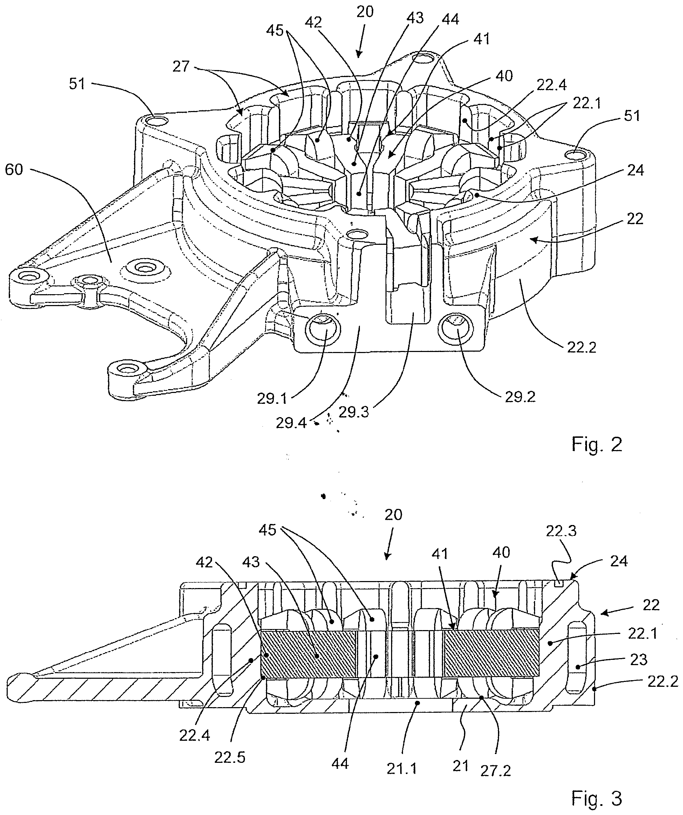

In den Figuren 2 und 3 ist die Gestaltung des Motorgehäuses 20 deutlicher erkennbar. Wie diese Darstellungen zeigen, ist die Innenwand 22.1 mit zueinander in Umfangsrichtung beabstandeten Stützabschnitten 22.4 versehen. Zwischen den Stützabschnitten 22.4 sind Aufnahmebereiche 27 gebildet. Diese Aufnahmebereiche 27 sind in Form von vertieften Mulden in die Innenwand 22.1 eingearbeitet.

In dem Motorgehäuse 20 kann ein Motorstator 40 untergebracht werden. Der Motorstator 40 besitzt einen Statorkern 41 aus ferromagnetischem Material. Insbesondere ist der Statorkern 41 aus mehreren Elektroblechen gebildet, die in Achsrichtung der Welle 12 aufeinander gestapelt sind. Beispielsweise kann der Statorkern 41 stanzpaketiert sein. Dabei werden einzelne Statorbleche aus einem Blechzuschnitt ausgestanzt und übereinandergestapelt. Die einzelnen Statorbleche können über Verprägungen zu einem einheitlichen Statorkern 41 miteinander verbunden sein.

Wie Figur 2 zeigt, weist der Statorkern 41 Zähne 43 auf. Diese Zähne 43 ragen radial nach innen. Die Zähne 43 sind an ihren radial außen liegenden Bereichen mit Verbindungsabschnitten 42 miteinander verbunden. Vorzugsweise sind die Verbindungsabschnitte 42 einteilig mit den Zähnen 43 verbunden. An ihren radial innenliegenden Enden weisen die Zähne 43 Polstücke 44 auf.

Der Statorkern 41 besitzt Spulen 45. Diese Spulen 45 werden von elektrisch leitenden Drähten gebildet, die um die Verbindungsabschnitte 42 herum gewickelt sind. Wie Figur 2 erkennen lässt, sind die Spulen 45 mit ihrem radial außen liegenden Bereich in den Aufnahmen 27 aufgenommen. Der radial innenliegende Bereich der Spulen 45 ist jeweils zwischen zwei benachbarten Zähnen 43 angeordnet.

Wie Figur 3 zeigt, kann der Statorkern 41 mit seinen Spulen 45 in das Motorgehäuse 20 eingelegt werden. Dabei stützt sich der Statorkern 41 mit seinen Verbindungsabschnitten 42 radial außen an den Stützabschnitten 22.4 des Motorgehäuses 20 ab. Mit den über den Umfang des Statorkerns 41 verteilt angeordneten Stützabschnitten 22.4 wird eine radiale Zentrierung des Statorkerns 41 erreicht. Idealerweise steht der Statorkern 41 in direktem Kontakt mit den Stützabschnitten 22.4, um eine gute Wärmeleitung der im Elektromotor erzeugten Verlustwärme in das Motorgehäuse 20 zu erreichen. Fertigungsbedingt kann jedoch auch hier ein geringes Spiel vorgesehen sein. Allerdings sollte dieses Spiel so toleriert sein, dass eine dadurch entstehende Desaxierung des Motorstators 40 zu dem Motorrotor 12.4 sich nicht negativ auf die Rotordynamik auswirkt.

Alternativ kann der Statorkern 41 in Verlängerung der nach innen gerichteten Zähne 43 radial nach außen gerichtete Zähne aufweisen, so dass der Statorkern 41 die Stützabschnitte 22.4 über die radial nach außen gerichteten Zähne kontaktiert.

Zusätzlich oder alternativ kann der Statorkern 41 in Achsenrichtung der Welle 12 an Widerlagern 22.5 des Motorgehäuses 20 abgestützt sein. Die Widerlager 22.5 können beispielsweise an die Stützabschnitte 22.4 im Winkel anschließen. Über die Widerlager 22.5 wird ein definierter Abstand des Motorstators 40 zu dem sich an das Motorgehäuse 20 anschließende Lagergehäuse 11 eingehalten. Vorzugsweise sollte dieser Abstand nicht kleiner als zwei Millimeter sein. Dieser Mindestabstand ist insbesondere dann erforderlich, wenn das Lagergehäuse 11 aus einem magnetisierbaren Material besteht.

Die radial innen liegenden Polstücke 44 liegen auf einem Innenkreis, wie die Figuren 2 und 3 zeigen. Dieser Innenkreis ist konzentrisch zu der Durchführung 21.1 in der Wandung 21 angeordnet.

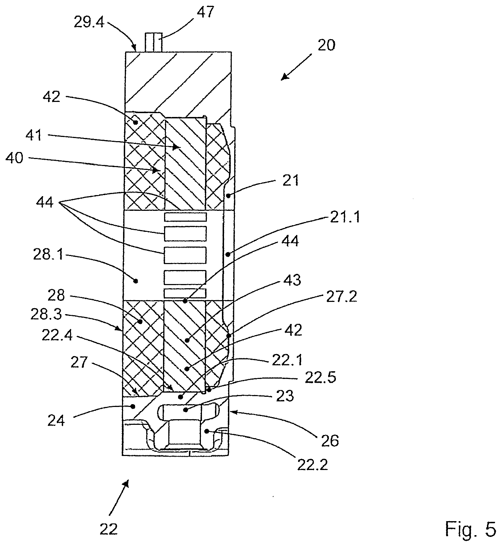

Der in das Motorgehäuse 20 eingelegte Statorkern 41 kann mit der Vergussmasse 28 umschlossen werden, wie dies die Figuren 1 und 5 zeigen. Der eingegossene Statorkern 41 wird dabei im Bereich der Spulen 45, der Zähne 43 und der Verbindungsabschnitte 42 von der Vergussmasse 28 umgeben. Lediglich die freien Enden der Zähne 43, welche die Polstücke 44 bilden und/oder die den Stützabschnitten 22.4 und/oder den Widerlagern 22.5 zugekehrten Bereiche werden nicht von der Vergussmasse 28 umschlossen. Denkbar ist es jedoch auch, dass zwischen den Stützabschnitten 22.4 und/oder den Widerlagern 22.5 Spaltbereiche gebildet werden, in denen auch Vergussmasse 28 angeordnet ist.

Die Figuren 1 und 5 zeigen weiter, dass die Polstücke 44 unter Einhaltung eines Spaltbereichs dem Motorrotor 12.4 gegenüberstehen. Koaxial zu dem von den Polstücken 44 eingeschlossenen Kreis bildet die Vergussmasse 28 einen Durchbruch 28.1. Vorzugsweise entspricht der Durchmesser dieses als Bohrung ausgebildeten Durchbruchs 28.1 dem Durchmesser des von den Polstücken 44 eingeschlossenen Kreises. Dann kann der Durchbruch 28.1 und die radial innen liegenden Enden der Polstücke 44 in einer Aufspannung bearbeitet werden. Beispielsweise können mit einem Bohrer der Durchbruch 28.1 und gleichzeitig die Polstücke 44 bearbeitet werden.

Figur 1 zeigt, dass die Vergussmasse 28 hinter dem Verdichterrad 12.9 eine Begrenzungsfläche 28.2 aufweist. Dabei ist die Begrenzungsfläche 28.2 unter Einhaltung eines Spalts beabstandet zu der Rückseite des Abschlusselements 36 des Verdichterrads 12.9 angeordnet. Die Vergussmasse 28 kann passgenau zur Erzeugung der Begrenzungsfläche bearbeitet und an die Kontur des Verdichterrads 12.9 angepasst werden. Die Begrenzungsfläche 28.2 kann, wie dies Figur 1 weiter zeigt, über einen Absatz in ein Luftführungselement 28.3 übergehen. Das Luftführungselement 28.3 erstreckt sich vorzugsweise in radialer Richtung.

Der Absatz zwischen der Begrenzungsfläche 28.2 und dem Luftführungselement 28.3 kann beispielsweise dergestalt sein, dass er den radial außen liegenden Bereich des Abschlusselements 36 übergreift. Hierdurch wird eine verbesserte Luftführung insbesondere dann erreicht, wenn das Luftführungselement 28.3 sich vorzugsweise absatzlos unmittelbar an die von den Verdichterschaufeln 12.10 gebildeten Luftführungsbereiche anschließt.

Das Luftführungselement 28.3 kann, wie dies im Ausführungsbeispiel nach Figur 1 gezeigt ist, eine Begrenzungsfläche für den Diffusorkanal 35 bilden. Entsprechend wird der Diffusorkanal 35 zwischen dem Luftführungselement 28.3 und einem Wandbereich des Verdichtergehäuses 30 gebildet.

Das Luftführungselement 28.3 muss sich nicht oder nicht vollständig radial erstrecken. Es kann auch eine beliebige andere Kontur aufweisen, um in optimaler Weise eine geeignete Luftführung zu bieten.

Die Figuren zeigen weiter, dass sich an den Diffusorkanal 35 der Verdichterkanal 32 in Form eines Spiralkanals anschließt. Das Luftführungselement 28.3 kann insbesondere bis in den Bereich des Verdichterkanals 32 geführt sein und/oder Teil von diesem sein. Allerdings ist es auch denkbar, dass das Luftführungselement 28.3 nur den Diffusorkanal 35 über dessen gesamte radiale Erstreckung oder nur über einen Teil seiner Radialerstreckung begrenzt.

Dadurch, dass das Luftführungselement 28.3 den Diffusorkanal 35 begrenzt, wird eine kompakte Bauweise des Turboladers in Achsenrichtung bewirkt. Insbesondere kann das Verdichterrad 12.9 dann nahe an der zugewandten Lagerstelle 14 angeordnet werden. Dies reduziert die Lagerbelastung und erhöht die Laufruhe des Turboladers.

In weiterer vorteilhafter Ausgestaltung kann die dem Verdichtergehäuse 30 zugewandte Seite der Vergussmasse 28 so bearbeitet sein, dass sie einen Absatz 28.4 bildet. Dieser Absatz 28.4 greift in eine Ausnehmung des Verdichtergehäuses 30 ein, um dieses exakt radial gegen über dem Motorgehäuse 20 auszurichten.

Figur 1 zeigt weiter, dass die Vergussmasse 28 im Bereich der Wandung 21 und koaxial zu der Durchführung 21.1 mit einer Freimachung 28.5 versehen sein kann. Damit wird erreicht, dass die Vergussmasse 28 die Positionierung des Zentrierabsatzes 17 nicht behindert.

Die Spulen 45 können über Strom-Versorgungsleitungen 46 an eine Spannungsversorgung angeschlossen sein. Die Strom-Versorgungsleitungen 46 sind vorzugsweise in die Vergussmasse 28 eingebettet. Wie Figur 1 zeigt, kann zu diesem Zweck beispielsweise zwischen dem Statorkern 41 und dem Verdichterrad 12.9 in dem Motorgehäuse 20 ein Raumbereich vorgesehen sein, in dem die Strom-Versorgungsleitungen 46 verlegt sind und der mit der Vergussmasse 28 ausgegossen ist. Auf diese Weise sind die Strom-Versorgungsleitungen 46 vor Korrosion und mechanischen Beanspruchungen geschützt untergebracht.

Figur 2 zeigt, dass das Motorgehäuse 20 seitlich eine Öffnung 29.3 aufweist, die Zugang zu dem Bereich schafft, in dem der Motorstator 40 im Motorgehäuse 20 aufgenommen ist. Diese Öffnung 29.3 dient dazu, die Strom-Versorgungsleitungen 46 seitlich aus dem von dem Motorgehäuse 20 gebildeten Raumbereich herauszuführen. Entsprechend können die Strom-Versorgungsleitungen 46 zu einer Anschlussseite 29.4 des Motorgehäuses 20 geführt werden. Vorzugsweise ist der die Öffnung 29.3 bildende Kanalbereich von der Vergussmasse 28 ausgefüllt. In Figur 1 ist angedeutet, dass im Bereich der Anschlussseite 29.4 ein Stromanschluss 47, beispielsweise ein Steckerelement angeordnet sein kann. Über diesen Stromanschluss 47 können die Spulen 45 an eine Spannungsversorgung einfach angekoppelt werden. Der Stromanschluss kann in die Vergussmasse 28 eingegossen sein.

Die Zeichnungen zeigen weiter, dass das Motorgehäuse 20 einen Kühlabschnitt 22.2 aufweist. Dieser Kühlabschnitt 22.2 kann beispielsweise den Motorstator 12.4 radial außen umgeben. In den Kühlabschnitt 22.2 ist ein Kühlmittelkanal 23 eingearbeitet. Dieser Kühlmittelkanal 23 umläuft den Motorstator 12.4 über zumindest 180°, vorzugsweise über zumindest 270° seines Umfangs. Die Enden des Kühlmittelkanals 23 münden in einem Kühlmittelauslass 29.1 und in einem Kühlmitteleinlass 29.2. Der Kühlmittelauslass 29.1 und der Kühlmitteleinlass 29.2 können so hergerichtet sein, dass darin Anschlussstutzen positioniert sind, über die ein Schlauch oder dergleichen Kühlmittelleitung angeschlossen werden kann. Wie Figur 2 zeigt, sind der Kühlmittelauslass 29.1 und der Kühlmitteleinlass 29.2 nebeneinander auf der gleichen Seite des Motorgehäuses 20 ausgebildet. Auf diese Weise entsteht im Motorgehäuse 20 ein Kühlmantel, der das Motorgehäuse 20 nahezu komplett in Umfangsrichtung des Motorgehäuses 20 umströmen kann.

Idealerweise werden die Stromversorgungsleitungen 46 zwischen dem Kühlmittelauslass 29.1 und dem Kühlmitteleinlass 29.2 durch die Öffnung 29.3 hindurch geführt, sodass es keine Kollision zwischen der Verkabelung und der Kühlmittelführung gibt.

Weiter idealerweise ist das Motorgehäuse aus einem thermisch gut leitenden Material, beispielsweise Aluminium hergestellt. Denkbar ist auch die Verwendung eines geeigneten Kunststoffes. Das Material sollte wegen der kompakten Bauweise des Motorgehäuses 20 nicht magnetisierbar sein, um die Funktionalität des Elektromotors nicht zu beeinträchtigen.

Wenn das Motorgehäuse 20 als Gussteil hergestellt wird, so wird zur Herstellung des Kühlmittelkanals 23 ein verlorener Kern eingesetzt. Für dessen Herstellung werden ein oder werden mehrere radiale Zugänge zum Kühlmittelkanal 23 geschaffen. Über diese radialen Zugänge kann der verlorene Kern nach Fertigung des Motorgehäuses 20 entnommen werden. Die Radialzugänge lassen sich dann beispielsweise mit einem Stopfen 25 fluiddicht verschließen.

Wie Figur 1 veranschaulicht, weist das Motorgehäuse 20 eine Gas-Druckleitung 70 auf. Diese kann in die Vergussmasse 28 des Motorgehäuses 20 eingearbeitet sein. Im Rahmen der Erfindung kann sich die Gas-Druckleitung 70 auch zumindest bereichsweise im Bereich der Seitenwand 22 des Motorgehäuses 20 oder einem sonstigen Motorgehäuse-Bereich erstrecken.

Die Gas-Druckleitung 70 weist einen Leitungseintritt 71 und einen Leitungsaustritt 72 auf. Der Leitungseintritt 71 mündet in dem Druckbereich des Verdichtergehäuses 30, also in Strömungsrichtung nach dem Verdichterrad 12.9.

Im vorliegenden Ausführungsbeispiel mündet der Leitungseintritt 71 im Bereich des Diffusorkanals 35. Allerdings kann es auch so sein, dass der Leitungseintritt an einer beliebigen anderen Stelle im Druckbereich des Verdichtergehäuses, beispielsweise auch im Spiralkanal mündet.

Weiterhin denkbar ist es, dass der Leitungseintritt 71 in einem Leitungsbereich mündet, der sich an den Spiralkanal in Strömungsrichtung nachfolgend anschließt.

Der Leitungsaustritt 72 mündet in dem Aufnahmeraum des Motorgehäuses 20, der hier einen Druckraum 73 bildet.

Während des Betriebs erzeugt das Verdichterrad 12.9 eine Gasströmung, wobei Gas, insbesondere Luft über die Gaszuführung 31 zugeführt und mittels des Verdichterrads 12.9 komprimiert wird. Das komprimierte Gas wird über den Diffusorkanal 35 zu dem anschließenden Spiralkanal geleitet. Anschließend wird das komprimierte Gas aus dem Verdichtergehäuse 30 abgeleitet.

Über die Gas-Druckleitung 70 wird das komprimierte Gas in den Druckraum 73 geleitet, so dass hier in etwa der gleiche Druck ansteht, wie im Druckbereich, beispielsweise im Diffusorkanal 35 bzw. im Spiralkanal. Wenn nun während eines Betriebszustands des Gas-Verdichters im Bereich des Dichtabschnitts 12.3 keine vollständige Dichtwirkung erreicht ist, so verhindert der im Druckraum 73 anstehende Gasdruck, dass Schmiermittel über den Dichtabschnitt 12.3 hinweg in das Motorgehäuse 20, insbesondere den Aufnahmebereich des Motorgehäuses 20 gelangen kann.

Im Rahmen der Erfindung kann es dabei insbesondere so sein, dass das Druckniveau im Druckraum 73 größer ist als der Druck in dem Bereich des Lagergehäuses 11, in dem der dem Dichtabschnitt 12.3 zugewandte Lagerabschnitt 12.1 im Lagergehäuse 11 angeordnet ist. Somit wird das Schmiermittel zuverlässig im Lagergehäuse 11 gehalten und es ist verhindert, dass dieses in das Motorgehäuse 20 gelangt.

Dadurch, dass sich sowohl der Elektromotor als auch das Verdichterrad 12.9 auf der dem Lagerabschnitt 12.1 abgewandten Seite der Dichtung 12.3 (in Achsenrichtung der Welle 12) befinden, ist nicht nur eine Verschmutzung des Aufnahmeraums des Motorgehäuses 20, sondern auch zusätzlich eine Verschmutzung im Bereich des Verdichtergehäuses 30 verhindert. Insbesondere wird dadurch eine Verschmutzung des von dem Verdichterrad 12.9 komprimierten Gasstroms verhindert.

Die Montage des Turboladers ist wie folgt. Zunächst wird das Lagergehäuse 11 mit der darin gelagerten Welle 12 hergerichtet. Anschließend wird das Motorgehäuse 20 über die Welle 12 geschoben, bis der Motorrotor 12.4 dem Motorstator 40 unter Bildung eines Spaltbereichs gegenübersteht. Diese Fügebewegung wird mittels der Befestigungsfläche 16.1, an der das Motorgehäuse 20 anschlägt, begrenzt. Anschließend kann das Verdichterrad 12.9 auf der Welle 12 montiert und die Mutter 12.8 angezogen werden.

Abschließend wird das Verdichtergehäuse 30 an der dem Lagergehäuse 11 gegenüberliegenden Seite an das Motorgehäuse 20 angefügt. Das Verdichtergehäuse 30, das Motorgehäuse 20 und das Lagergehäuse 11 weisen zueinander fluchtende Bohrungen auf. Durch diese können Befestigungsschrauben 50 hindurchgesteckt und verschraubt werden. Alternativ kann das Motorgehäuse 20 auch am Lagergehäuse 11 angeschraubt sein. Das Verdichtergehäuse 30 kann auch nur mit dem Motorgehäuse 20, beispielsweise über eine getrennte Verschraubung oder über ein Spannband verbunden werden.

Zur Fertigung des Motorgehäuses 20 wird zunächst die in den Figuren 2 und 3 gezeigte Baueinheit gebildet. Dabei ist die Wandung 21 so gestaltet, dass sie noch nicht mit der Durchführung 21.1 versehen ist. Anschließend kann die in den Figuren 2 und 3 gebildete Baueinheit mit der Vergussmasse 28 befüllt werden. Dann wird in einem Arbeitsschritt der Durchbruch 28.1 in der Vergussmasse 28 und gleichzeitig die Durchführung 21.1 gebohrt. Weiterhin lassen sich an der ausgehärteten Vergussmasse 28 das Luftführungselement 28.3 und/oder die Begrenzungsfläche 28.2 und/oder der Absatz 28.4 und/oder die Freimachung 28.5 mittels spanender Bearbeitung nacharbeiten.

Die Vergussmasse 28 kann beispielsweise von einem thermisch beständigen Material, vorzugsweise einem Harzmaterial, beispielsweise von einem mit Aluminiumoxid gefüllten Hochtemperaturharz gebildet sein.

Bevorzugt ist die Vergussmasse von einem wärmeleitenden Material gebildet und weist vorzugsweise eine Wärmeleitfähigkeit im Bereich zwischen 0,5 W / (m K) und 5 W / (m K) auf. Auf diese Weise kann die Verlustwärme des Elektromotors zuverlässig über die Kontaktbereiche zwischen der Vergussmasse 28 und dem Motorgehäuse 20 in das Kühlmedium im Kühlmittelkanal 23 abgeleitet werden. Auch wird auf diese Weise eine Wärmeableitung über das Luftführungselement 28.3 in die Verdichterluft, welche im Verdichtergehäuse 30 geführt wird, erreicht.

Um einen Kurzschluss zu verhindern, besteht die Vergussmasse 28 vorzugsweise aus einem elektrisch nicht leitenden Material. Dann kann auf zusätzliche Isolationsmaßnahmen verzichtet werden.

Wie Figur 2 zeigt, kann an das Motorgehäuse 20 ein Halter 60, zur Befestigung eines Aktuators des elektrisch unterstützten Turboladers, angegossen sein.

In dem in den Figuren 1 bis 5 dargestellten Ausführungsbeispiel wird der Statorkern 41 an den axial nach innen vorspringenden Stützabschnitten 22.4 gegenüber der Innenwand 22.1 abgestützt. Alternativ ist es jedoch auch denkbar, dass radial nach außen vorspringende Stützabschnitte am Statorkern 41 vorhanden sind, die dann im Kontakt zu dem Motorgehäuse 20 stehen.

Um eine Verdrehung des Statorkerns 41 gegenüber dem Motorgehäuse 20 zu verhindern, empfiehlt es sich, eine in Umfangsrichtung formschlüssige Verbindung zwischen dem Motorgehäuse 20 und dem Statorkern 41 vorzusehen.

Zusätzlich oder alternativ kann eine Verdrehung des Statorkerns 41 gegenüber dem Motorgehäuse 20 mittels der Vergussmasse 28 stoffschlüssig verhindert werden.

Weiterhin kann beispielsweise auch eine stoffschlüssige und/oder formschlüssige Verbindung zwischen dem Statorkern 41 und dem Motorgehäuse 20 hergestellt werden.

Eine weitere alternative Ausgestaltungsvariante sieht vor, dass die Motoreinheit ein ringförmiges Motorgehäuse 20 aufweist, das sowohl auf der Verdichterseite als auch auf der Lagergehäuseseite von der elektrisch isolierenden Vergussmasse 28 abgeschlossen ist. Das Motorgehäuse 20 ist somit bodenlos und nicht topfförmig ausgestaltet.

Eine weitere alternative Ausgestaltungsvariante kann so sein, dass das Motorgehäuse 20 und das Lagergehäuse 11 gemeinsam einteilig, zum Beispiel aus Aluminium oder Kunststoff gefertigt sind.

Während des Betriebs des Turboladers kann der Antrieb des Verdichterrads 12.9 durch den Elektromotor unterstützt werden. Dabei entsteht in den Spulen 45 des Motorstators 40 Verlustwärme. Diese Verlustwärme überträgt sich auf den Statorkern 41. Da nun der Statorkern über die Stützabschnitte 22.4 mit dem Motorgehäuse 20 in Verbindung steht, wird diese Wärme in das Motorgehäuse 20 zumindest teilweise eingetragen. Das Motorgehäuse 20 besteht aus einem gut wärmeleitfähigen Material, beispielsweise Aluminium, wie dies oben erwähnt wurde. Dementsprechend wird die Wärme in den Kühlmittelkanal und das dort strömende Fluid geleitet. Wenn, wie bei dem vorliegenden Ausführungsbeispiel, auch vorgesehen ist, dass der Statorkern 41 an den Widerlagern 22.5 abgestützt ist, so erfolgt auch über die Widerlager 22.5 ein Wärmeeintrag in das Motorgehäuse 20.

Zum Zwecke einer besonders effektiven Wärmeabfuhr kann vorgesehen sein, dass jedem Verbindungsabschnitt 42 des Statorkerns 41 ein Stützabschnitts 22.4 und/oder ein Widerlager 22.5 zugeordnet ist. Hierdurch kann die thermisch wirksame Kontaktfläche zwischen dem Statorkern 51 und dem gekühlten Gehäuse 20 maximiert werden. Im vorliegenden Ausführungsbeispiel sind sechs Polpaare des Elektromotors vorgesehen. Dementsprechend sind zwölf Stützabschnitte 22.4 und/oder zwölf Widerlager 22.5 vorgesehen. Dies ist jedoch nicht zwingend. Insbesondere kann auch nur ein Teil der Stützabschnitte 22.4 und/oder ein Teil der Widerlager 22.5 an dem Statorkern 41 anliegen.

Die Zeichnungen zeigen auch, dass die Stützabschnitte 22.4 in radialer Verlängerung zu den Zähnen 43 des Statorkerns stehen. Besonders vorteilhaft ist es, wenn die miteinander in Verbindung stehenden Kühlabschnitte des Motorgehäuses 20 und der Verbindungsabschnitte 42 des Statorkerns 41 zentrisch oder annähernd zentrisch zwischen den benachbarten Spulen 45 angeordnet sind, um eine gleichmäßige Wärmeabfuhr zu erreichen.

Wie insbesondere Figur 2 zeigt, erstreckt sich der Kühlmittelkanal 23 von dem Kühlmitteleinlass 29.2 zu dem Kühlmittelauslass 29.1. Die Zeichnung gibt zu erkennen, dass sich dabei der Kühlmittelkanal 23 um über 270° des Umfangs des Motorstators 40 erstreckt, so das eine besonders effektive Kühlung möglich wird.

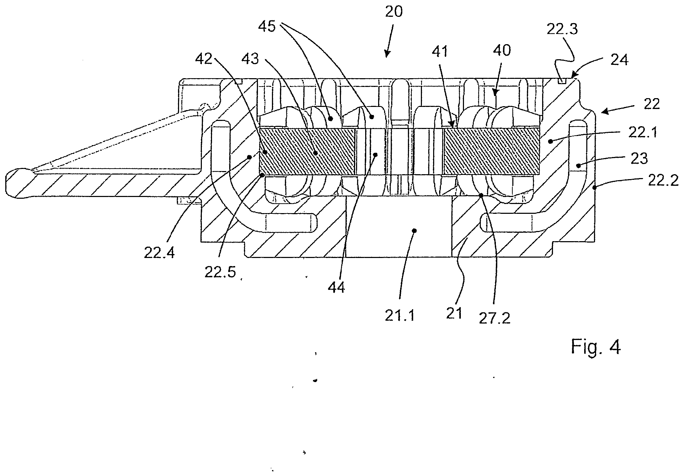

In Figur 4 ist eine Motoreinheit gezeigt, die im Wesentlichen der Motoreinheit gemäß den Figuren 1 bis 3 und 5 entspricht. Insofern wird auf die vorstehenden Ausführungen zu diesen Figuren Bezug genommen. Zur Vermeidung von Wiederholungen wird lediglich auf die Unterschiede eingegangen. Wie Figur 4 zeigt, ist das Motorgehäuse 20 hinsichtlich der Gestaltung des Kühlmittelkanals 23 abgeändert. Dementsprechend weist der Kühlmittelkanal 23 einen ersten Bereich auf, der sich in Achsrichtung der Welle erstreckt. Anschließend an diesen 1. Bereich besitzt der Kühlmittelkanal 23 einen Radialbereich, der sich zumindest bereichsweise in radialer Richtung erstreckt. Die Projektionen des Motorstators 40 und des Radialbereichs in Richtung der der Achse der Welle 12 in eine Ebene überdecken sich zumindest bereichsweise. Bei dieser Ausgestaltung eines Gasverdichters/Turboladers 10 wird nicht nur eine Wärmeabfuhr von den Spulen 45 in den Kühlmittelkanal 23 in radialer Richtung, sondern auch in Achsrichtung der Welle 12 erreicht.

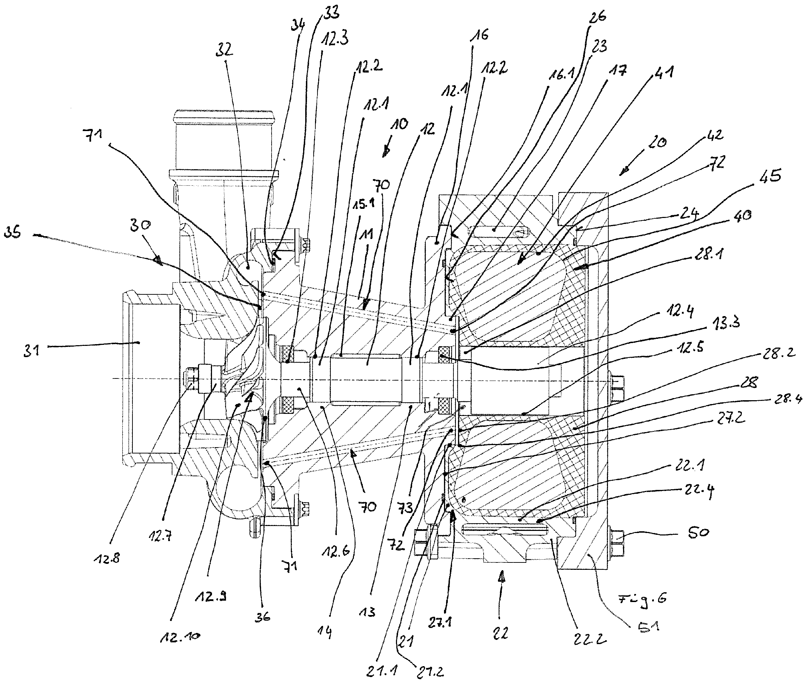

Figur 6 zeigt ein weiteres Ausführungsbeispiel der Erfindung, wobei als Gasverdichter 10 ein elektrisch angetriebener Verdichter gezeigt ist, der insbesondere als Verdichter für eine Brennstoffzelle Verwendung finden kann.

Gleiche Bauteile oder gleichwirkende Bauteile sind mit gleichen Bezugszeichen versehen, weswegen zur Vermeidung von Wiederholungen auf die obigen Ausführungen Bezug genommen werden kann.

Wie Figur 6 zeigt, ist wieder ein Lagergehäuse 11 verwendet, in dem eine Welle 12 auf zwei Lagerabschnitten 12.1 gelagert ist. Dabei kann zumindest einer der Lagerabschnitte 12.1 ein hydrodynamisches Gleitlager 12.2 aufweisen.

Auf der in Figur 6 linken Seite des Lagergehäuses 11 ist das Verdichtergehäuse 30 mit seiner Gaszuführung 31 und seinem Verdichterkanal 32 angeordnet.

Das Verdichtergehäuse 30 kann mit dem Lagergehäuse 11 auswechselbar verbunden sein. Zu diesem Zweck wird das Verdichtergehäuse 30 mit seiner Anschlussseite 33 und unter Verwendung einer Dichtung 34 mit dem Lagergehäuse 11 verbunden, beispielsweise verschraubt.

Auf der gegenüberliegenden Seite des Lagergehäuses 11 ist das Motorgehäuse 20 mit dem Lagergehäuse 11 verbunden. Ähnlich wie bei dem 1. Ausführungsbeispiel weist das Motorgehäuse 20 eine Wandung 21 auf, in der ein ringförmig verlaufender Kühlmittelkanal 23 angeordnet ist. Das Motorgehäuse 20 umgibt einen Aufnahmeraum, in dem der Motorrotor 12.4 und der Motorstator 40 angeordnet sind.

Das Motorgehäuse 20 besitzt gegenüberliegend dem Lagergehäuse 11 eine Stützfläche 24. Auf dieser Stützfläche 24 ist ein Deckel 51 abgedichtet aufgesetzt und mittels Befestigungselementen 50 mit dem Motorgehäuse 20 verbunden. Auf diese Weise wird eine abgedichtete Kapselung des Aufnahmeraums erreicht.

Wie Figur 6 weiter zeigt, ist eine Gas-Druckleitung 70, wie bei dem Ausführungsbeispiel gemäß den Figuren 1 bis 5, vorgesehen, die mit einem Leitungseintritt 71 im Druckbereich des Druck-Erzeugers, also in Strömungsrichtung nach dem Verdichterrad 12.9 mündet. Im vorliegenden Ausführungsbeispiel mündet der Leitungseintritt 71 im Diffusorkanal 35. Wie oben beschrieben, kann er aber auch an einer beliebigen anderen Stelle stromab des Verdichterrads 12. 9 münden. Die Gas-Druckleitungen 70 sind in das Lagergehäuse 11 integriert, beispielsweise als Bohrungen.

Die Gas-Druckleitungen 70 haben jeweils einen Leitungsaustritt 72, der wieder im Aufnahmebereich des Motorgehäuses 20 mündet und mithin steht dieser Leitungsaustritts 22 in gasleitender Verbindung mit einem Druckraum 73.

Während des Betriebs kann über die Gas-Druckleitungen 70 komprimierte Gas in den Bereich des Druckraums 73 gelangen, sodass sich hier ein Druckniveau erzeugen lässt, welches verhindert, dass Verunreinigungen, beispielsweise Schmiermittel aus dem Lagergehäuse 11 in den Aufnahmeraum des Motorgehäuses 20 gelangen.

## Patentansprüche

1. Gasverdichter (10), insbesondere Turbolader mit einem drehbar gelagerten Verdichterrad (12.9), das zumindest teilweise in einem Verdichtergehäuse (30) angeordnet ist, wobei das Verdichtergehäuse (30) einen Gas-Führungsbereich aufweist, zur Führung eines mittels des Verdichterrads (12.9) komprimierten Gasstroms, wobei ein Elektromotor vorgesehen ist, der einen Motorrotor (12.4) und einen Motorstator (40) aufweist und der zumindest bereichsweise in einem Aufnahmebereich eines Motorgehäuses (20) aufgenommen ist,
**dadurch gekennzeichnet,**
**dass** ein Gasdruck-Erzeuger vorgesehen ist, der über wenigstens eine Gas-Druckleitung (70) in luftleitender Verbindung mit dem Aufnahmebereich des Motorgehäuses (20) steht.

2. Gasverdichter (10) nach Anspruch 1, **dadurch gekennzeichnet, dass** der Gasdruck-Erzeuger das Verdichterrad (12.9) aufweist, und dass die Gas-Druckleitung (70) mit dem von dem Verdichtergehäuse (12.9) gebildeten oder einem in Strömungsrichtung nach dem Verdichtergehäuse (12.9) angeordneten Gas-Führungsbereich in gasleitender Verbindung steht.

3. Gasverdichter (10) nach Anspruch 1 oder 2, **dadurch gekennzeichnet, dass** der Elektromotor mit seinem Motorrotor (12.4) mittelbar oder unmittelbar an eine Welle (12) angekoppelt ist, dass die Welle (12) wenigstens einen Lagerabschnitt (12.1) aufweist zur drehbaren Lagerung der Welle (12), vorzugsweise in einem Lagergehäuse (11), dass in Achsrichtung der Welle (12) zwischen dem Lagerabschnitt (12.1) und dem Motorrotor (12.4) ein Dichtabschnitt (12.3, 13.3), vorzugsweise aufweisend eine Dichtung, angeordnet ist, und dass der Aufnahmebereich des Motorgehäuses (20), der mit der Gas-Druckleitung (70) in luftleitender Verbindung steht, und/oder das Verdichterrad (12.9), in Achsrichtung der Welle (12) auf der dem Lagerabschnitt (12.1) abgewandten Seite des Dichtabschnitts (12.3, 13.3) angeordnet ist.

4. Gasverdichter (10) nach einem der Ansprüche 1 bis 3, **dadurch gekennzeichnet, dass** der wenigstens eine Lagerabschnitt (12.1) ein hydrodynamisches Gleitlager (12.2) aufweist, welches mit einer Schmiermittelführung (15.1) in fluidleitender Verbindung steht, derart, dass dem hydrodynamischen Gleitlager (12.2) über eine Schmiermittelversorgung (15) Schmiermittel zuleitbar ist.

5. Gasverdichter (10) nach einem der Ansprüche 1 bis 4, **dadurch gekennzeichnet, dass** ein Lagergehäuse (11) vorgesehen ist, in dem die Welle (12) mittels des zumindest einen Lagerabschnitts (12) gelagert ist, und dass das Motorgehäuse (20) lösbar mit dem Lagergehäuse (11) verbunden ist oder zumindest bereichsweise einteilig mit dem Lagergehäuse (11) verbunden ist.

6. Gasverdichter (10) nach Anspruch 5, **dadurch gekennzeichnet, dass** die Gas-Druckleitung (70) zumindest bereichsweise durch das Lagergehäuse (11) hindurchgeführt ist oder dass die Gas-Druckleitung (70) zumindest bereichsweise von einer Bypassleitung, vorzugsweise einer flexiblen Rohrleitung, gebildet ist, die vorzugsweise an dem Lagergehäuse (11) vorbeigeleitet ist.

7. Gasverdichter (10) nach einem der Ansprüche 1 bis 6, **dadurch gekennzeichnet, dass** der Aufnahmebereich des Motorgehäuses (20) einen Druckraum (73) aufweist, und dass die zumindest eine Gas-Druckleitung einen Leitungsaustritt (72) aufweist, der in den Druckraum (73) mündet.

8. Gasverdichter (10) nach einem der Ansprüche 1 bis 7, **dadurch gekennzeichnet, dass** der Aufnahmebereich des Motorgehäuses (20) gegenüber der Umgebung abgedichtet ist.

9. Gasverdichter (10) nach einem der Ansprüche 1 bis 8, **dadurch gekennzeichnet, dass** das Verdichtergehäuse (30) eine Gaszuführung (31) aufweist, dass in Strömungsrichtung nach der Gaszuführung (31) das Verdichterrad (12.9) angeordnet ist, dass in Strömungsrichtung nach dem Verdichterrad (12.9) der Verdichterkanal (32) angeordnet ist, und dass die Gas-Druckleitung (70) im Bereich des Verdichterkanals (32) mit einem Leitungseintritt (71) mündet.

10. Gasverdichter (10) nach Anspruch 9, **dadurch gekennzeichnet, dass** der Verdichterkanal (32) einen Diffusorkanal (35) aufweist, an den vorzugsweise in Strömungsrichtung nach dem Verdichterrad (12.9) ein Spiralkanal angeschlossen ist, und dass die Gas-Druckleitung (70) im Bereich des Diffusorkanals (35) oder im Bereich des Spiralkanals mit dem Leitungseintritt (71) mündet.

11. Gasverdichter (10) nach einem der Ansprüche 1 bis 10, **dadurch gekennzeichnet, dass** das Verdichtergehäuse (30) lösbar mit dem Lagergehäuse (11) verbunden oder das Verdichtergehäuse (30) zumindest teilweise einteilig von dem Lagergehäuse (11) gebildet wird.

12. Gasverdichter (10) nach einem der Ansprüche 1 bis 11, **dadurch gekennzeichnet, dass** eine Kühleinrichtung vorgesehen ist, die einen Kühlmittelkanal (23) aufweist, derart, dass mittels eines im Kühlmittelkanal (23) geführten Kühlmediums der Elektromotor und/oder die Gas-Druckleitung (70) gekühlt wird.

13. Gasverdichter (10) nach Anspruch 12, **dadurch gekennzeichnet, dass** der Kühlmittelkanal (23) im Bereich des Motorgehäuses (20) und/oder im Bereich des Lagergehäuses (11) geführt ist.

14. Gasverdichter (10) nach einem der Ansprüche 1 bis 13, **dadurch gekennzeichnet, dass** das Motorgehäuse (20) den Motorstator (40) mit seinem Statorkern (41 und Statorwicklungen aufnimmt, und dass der Motorstator (40) zumindest bereichsweise in eine Vergussmasse (28) des Motorgehäuses (20) eingebettet ist.

15. Gasverdichter (10) nach einem der Ansprüche 1 bis 14, **dadurch gekennzeichnet, dass** ein Durchfluss-Regler, insbesondere eine regelbares Ventil, vorgesehen ist, mit dem der Gasdurchfluss durch die Gas-Druckleitung (70) regelbar ist.
